# EUROPEAN PATENT SPECIFICATION

(11) **EP 3 111 594 B1**
(45) Date of publication and mention of the grant of the patent: **30.12.2020**
(21) Application number: 15754694.6
(22) Date of filing: 27.02.2015
(51) Int. Cl.: H04L 12/18, H04L 12/28, H04L 12/801

(54) **SYSTEM, DEVICE, AND METHOD FOR COMMUNICATING DATA OVER A MESH NETWORK**
SYSTEM, VORRICHTUNG UND VERFAHREN ZUR DATENÜBERTRAGUNG ÜBER EIN MESH-NETZWERK
SYSTÈME, DISPOSITIF ET PROCÉDÉ POUR COMMUNIQUER DES DONNÉES SUR UN RÉSEAU MAILLÉ

(30) Priority: 27.02.2014 US 201461945512 P
(43) Date of publication of application: 04.01.2017
(73) Proprietor: Trane International Inc., Piscataway, NJ 08855 (US)
(72) Inventor: VANDERZEE, Joel, C., La Crosse, WI 54601-2118 (US)
(74) Representative: Haseltine Lake Kempner LLP
(86) International application number: PCT/US2015/018060
(87) International publication number: WO 2015/131071

(56) References cited:
- EP-A2- 2 058 979
- GB-A- 2 500 450
- KR-A- 20090 012 947
- US-A1- 2008 002 599
- US-A1- 2010 302 970
- US-A1- 2011 106 961
- US-A1- 2011 210 816
- US-A1- 2013 188 492
- US-B1- 6 894 990

## Description

### FIELD

This disclosure generally relates to systems, devices, and methods for data transmission and control of data transmission between network devices of a network which includes, for example, a mesh network (e.g., a network using ZigBee wireless standard).

### BACKGROUND

Generally, a node of a mesh network (e.g., a mesh radio network, a network using ZigBee standard IEEE 802.15.4, etc.) can communicate with another node in the network via a direct node-to-node communication (i.e., unicast). Unicasting involves the node preparing data (e.g., piece of data, data packet, etc.) with a destination address (e.g., identification information) of the receiver node as a part of the data, and then transmitting that data. Thus, the data itself is designated for a specific destination address (e.g., a specific node). Accordingly, even if the node is communicating to multiple nodes (i.e., multicast) in the mesh network, the data is prepared with destination addresses of the specific nodes that are to ultimately receive and use the data. This ensures that only the nodes that are predetermined by the sender ultimately receive and use the data.

Thus, if another node (i.e., not predetermined to be the recipient of the data) in the network receives the data, that node reads the destination address to see whether the destination address corresponds with that of the node. If the destination address corresponds with that of the node, the node saves and executes the entire data. The node does not transmit that data to any other node.

However, if the destination address does not correspond with that of the node, the node can simply delete the data from memory. The node can be configured to transmit such data so that there is a chance that the data can be transmitted to the proper node at the destination address embedded in the data.

If a plurality of nodes of the mesh network requires the same data, such as for example, firmware update data, the data can be transmitted from one node to another via the node-to-node communication. Accordingly, the process of distributing the data can involve communication from a first node to a second node. Further, even when the second node has the most recent firmware, it might be required to receive and resend the firmware update data so other nodes (e.g., a third node) can receive the data. Thus, transmission and retransmission of the same data can occur throughout at least a significant portion of the mesh network.

One of the nodes in a mesh network can be a system controller device. A system controller device (e.g., coordinator device) can queue the other nodes for communication and send data to each of the nodes, one by one. Such serial process can require the data be sent from the system controller device to a first node, and then from the first node to a second node, and so on. That is, even when the system controller device controls and coordinates the communication of the data to the nodes, one-by-one, one of the nodes may have to relay the same data more than once. That is, the transmission of the data may require multiple "hops" through the network. Thus, there can be a situation wherein the same data is transmitted more than once between and/or through one or more nodes. This kind of communication process requires queuing of every node by the controller device to transmit the same data to each of the destination nodes.

Another example of a communication process in the mesh network is via a broadcast communication, where a system controller device broadcasts the data to the nodes, and the nodes that are within range of the broadcast can receive the data. In order to transmit the data to the nodes that are outside the broadcast range from the system controller device, the nodes that have received the data can rebroadcast the data.

US 6,894,990 describes a system and method for supporting Internet Protocol Multicast in mesh TDMA satellite networks using a centralized route server architecture. Individual satellite terminals perform forwarding of multicast IP traffic to destination terminals based on information provided by the route-server. Channel capacity for multicast traffic can be statically or dynamically assigned.

US 2011/0106961 describes a content delivery system including a unicast content delivery module, a multicast content delivery module and a content monitor module. The unicast content delivery module is configured to provide content using a unicast protocol, and the multicast content delivery module is configured to provide the content using a multicast protocol. The content monitor module is configured to receive requests from a plurality of clients for the content, count the requests to determine if the number of requests exceeds a threshold, and instruct the plurality of clients to receive the content from the multicast content delivery module when the number of requests exceeds the threshold.

US 2013/0188492 describes a device, a system and a method for controlling data packet transmissions in a wireless mesh network, wherein a time slot is randomly selected within a determined answer interval for transmitting an answer responding to a received data packet.

### SUMMARY

The invention is defined in the attached independent claims to which reference should now be made. Further, optional features may be found in the sub-claims appended thereto.

The embodiments disclosed herein are directed towards systems, devices, and methods for improving the transmission of data over a network. It has been found that there are deficiencies in a network where a system controller device relies on queuing a plurality of nodes (or devices) for sending data to each node, one by one, where the data is the same data. Because the general process described above requires the controller device to transmit multiple pieces of data over and over again to multiple nodes (even when the data is the same data), the general process can consume a large amount of time. For example, updating thirty wireless nodes in a general mesh network using the above-described general process can take several hours. The efficiency of this process is inefficient due to, for example, for nodes that are distant from the system controller device, each data packet must be transmitted multiple times (e.g., over multiple "hops"), even when the data packet (or all of the data formed by the data packets) has already been sent to the nodes that are in-between the system controller device and the destination node.

The disclosure herein describes network communication methods and systems having one or more devices, wherein the transmission of data to each of the nodes in the network can be improved.

An embodiment of the method includes a communication process performed by one or more nodes in a network, wherein the method does not require and does not include data tracking by the one or more nodes. That is, for a network using, for example, the ZigBee standard, tracked broadcasts can be a roadblock to communicating/transmitting data to the nodes. In a ZigBee network, the tracking of broadcast packets is generally performed by both the sender device and the receiver device(s) to detect repeats of previously sent or received broadcast packets for some time period. For example, the ZigBee standard generally requires that a sender device (which can be one of the nodes) transmits broadcast data packets three times with one second intervals therebetween. The embodiment eliminates data tracking of the broadcast data for ZigBee (i.e., the embodiment is a modified ZigBee standard so that untracked broadcasts can function with the nodes in the ZigBee network).

An embodiment of the method includes a communication process performed by one or more nodes in a network, wherein a first node unicasts (not broadcasts) to a second node (e.g., a controller) for data (e.g., firmware update data).

When the second node receives the unicasted request sent from the first node, the second node broadcasts (not unicasts) the requested data (e.g., without a specific destination address embedded in the data). The first node receives the broadcasted data, stores the data, and/or executes the data, etc.

In the meantime, one or more of other nodes, a third node for example, can receive the broadcasted data and store it to a non-transitory memory of the third node. That is, the third node "eavesdrops" on the broadcast from the second node that is in response to a request for the data from the first node. Although the third node has not sent a request for such data, the third node's processor is configured to execute computer-executable instructions to determine whether the data is appropriate for the third node. When the third node determines that the data received via broadcast from the first node is appropriate for the third node (e.g., the data received via broadcast is a firmware update for the same model, make, device type, etc.), the processor of the third node saves the data to a non-transitory memory. Thus, if another node (e.g., the controller device) sends a communication to the third node to see whether the third node requires the data (e.g., firmware update, etc.), the third node can communicate to the controller that the third node already has the data. Even if the third node does not have the complete data (e.g., has some data packets but not all of the packets), the third node can request (via unicast and/or broadcast) for only the missing pieces of the data. Thus, the embodiment of the process of communicating in the network can significantly improve network traffic and the time needed for sending the same data to multiple node devices in the network. Further, advantageously, the second node (e.g., controller) does not have to keep track of the nodes that have been sent the data (e.g., firmware update) via unicast. The second node can simply broadcast the data as the request for the data (or pieces of the data) is received by the second node.

In an embodiment, the data that is broadcast does not have a specific destination address embedded in the data.

In an embodiment, the data that is broadcast has a specific destination address embedded in the data, but a processor of a node is configured to ignore the specific destination address and make a determination as to whether the data received via broadcast is appropriate for the node without considering the destination address portion of the broadcast data.

When a second node receives the broadcasted request sent from the first node, the second node broadcasts the requested data (e.g., without a specific destination address embedded in the data). The first node receives the broadcasted data, stores the data, and/or executes the data, etc.

In another embodiment of the method, the first node broadcasts (and not unicasts) to the network for data (e.g., firmware update data).

In an embodiment, the communication method includes one or more transmission of data between a controller device and a first node which determines which data (e.g., data packet, piece of data, etc.) is to be communicated by the controller device to the first node.

In an embodiment, the communication by the controller device to the first node is via broadcast.

In an embodiment, the communication by the controller device to the first node is via wireless broadcast.

In an embodiment, the controller device broadcasts the data requested by the first node.

In an embodiment, the controller device broadcasts the data requested by the first node wirelessly.

In an embodiment, the controller device broadcasts the data requested by the first node via photons and/or radiation.

In an embodiment, first node receives the data that has been broadcasted from the controller device.

In an embodiment, the first node does not perform a tracking function of the data.

In an embodiment, the controller does not perform a tracking function of the data.

In an embodiment, one or more other nodes (i.e., nodes other than the first node) receive the data broadcasted from the controller device, and the one or more other nodes save the data into the respective node's memory.

In an embodiment, the one or more other nodes do not perform a tracking function of the data.

### BRIEF DESCRIPTION OF THE DRAWINGS

Figures 1-5 illustrate an exemplary schematic diagram of a network, according to different embodiments of the methods.
Figure 6 illustrates an exemplary schematic diagram of an embodiment of a node device.

### DETAILED DESCRIPTION

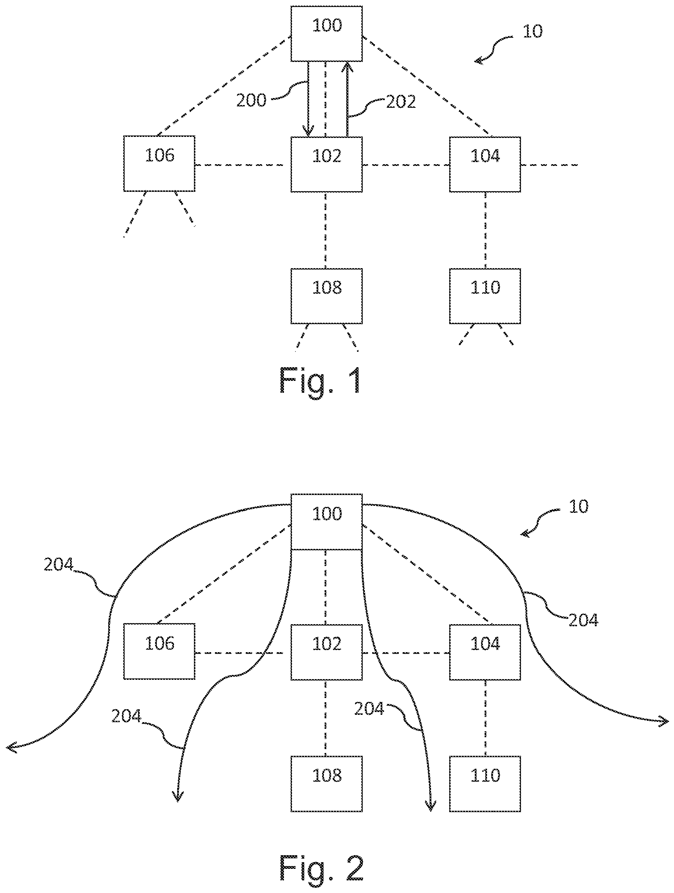

This disclosure is directed to systems, devices, and methods for communicating data to devices in a network. Figures 1-5 show exemplary schematic diagrams of the network 10 (connections shown as broken lines) according to different embodiments.

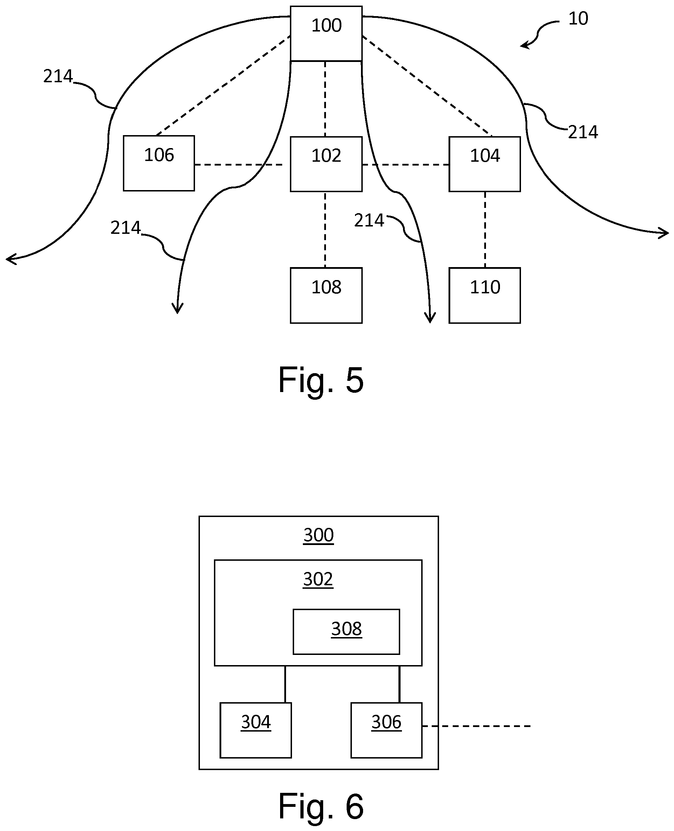

Figure 1 shows the network 10, which can be or include a wired network, wireless network, wireless radio network, mesh network, etc. The first node or device 100 can be a source of data. Accordingly the first node 100 can be identified as a sender device, a controller device, etc. In this example, the other devices connected to the network 10 can be identified as nodes or receiver devices 102, 104, 106, 108, 110. The receiver devices 102, 104, 106 are one "hop" away from the sender device 100. The receiver devices 108, 110 are two "hops" away from the sender device 100. Accordingly, data transmitted from the sender device 100 that is specifically destined for the receiver device 108 can go through the receiver device 102, which is retransmitted by the receiver device 102 to the receiver device 108. It is to be understood that additional devices can be connected to the network 10 which require additional "hops" from the sender device 100. It is understood that the devices 100, 102, 104, 106, 108, 110 in the network 10 are specialized computer devices, wherein each of the devices 100, 102, 104, 106, 108, 110 includes a processor, a non-transitory memory, a network interface, and other components one skilled in the art understands are inherently required for the operation of the systems, devices, and methods for communicating data via the network 10 (e.g., Figure 6 shows further details and they are described below). Accordingly, portions or all of the methodology and/or processes described herein can be computer-readable and/or computer-executable instructions which can be stored in one or more non-transitory memories and/or executed by one or more processors of respective devices 100, 102, 104, 106, 108, 110 in the network 10.

One or more of the receiver devices 102, 104, 106, 108, 110 are configured to receive broadcast data via their respective network interfaces, and they can also be configured to broadcast the data. Accordingly, one or more of the receiver devices 102, 104, 106, 108, 110 can be a sender device as well. Specifically, the broadcast data can be wireless, radio frequency, or other means using radiation, photons, etc. Further, one or more of the nodes 100, 102, 104, 106, 108, 110 can be configured to not track the broadcast data. The elimination of the tracking process at the nodes 100, 102, 104, 106, 108, 110 can eliminate the time delay (e.g., around 10 seconds) associated with tracking processes.

The sender device 100 can communicate 200 with the receiver device 102 to determine what or which pieces of data the receiver device 102 requires and/or needs. In response to the communication 200, the receiver device 102 can communicate 202 to the sender device 100 a data request. The data request can be, for example, a request for a particular piece of data, a list of pieces of data, one or more data packets, etc. For example, the data request can be a request for firmware update data pieces 1-5 for device type A, which might be a particular firmware update which the receiver device 102 having type A needs.

Figure 2 shows the sender device 100 transmitting 204 (e.g., broadcasting wirelessly) the data requested by the receiver device 102. The sender device 100 does not need to consider what the other receiver devices 104, 106, 108, 110 require at this time. The data transmitted by the sender device 100 can be received by the receiver device 102 as well as the other receiver devices 104, 106, 108, 110. The other receiver devices 104, 106, 108, 110, if they are in range of the broadcast 204, can "eavesdrop" on this transmission. That is, although the broadcast data from the sender device 100 is in response to and for the receiver device 102, the other receiver devices 104, 106, 108, 110 are configured to receive the data. It is not necessary that the data which are received by the eavesdropping nodes are sequentially received. That is, the eavesdropping nodes can receive and store data in any order. The other devices 104, 106, 108, 110 can determine whether the received data (e.g., firmware update data pieces 1-5 for device type A) is appropriate. That is, if one or more of the other devices 104, 106, 108, 110 are of the type A, then that device can determine that the received data is useful and store that data to the non-transitory memory. If a particular device determines that the received data is not useful because the device is, for example type B, then the received data is not stored in the non-transitory memory (or if already stored in the non-transitory memory, the data is deleted from the non-transitory memory).

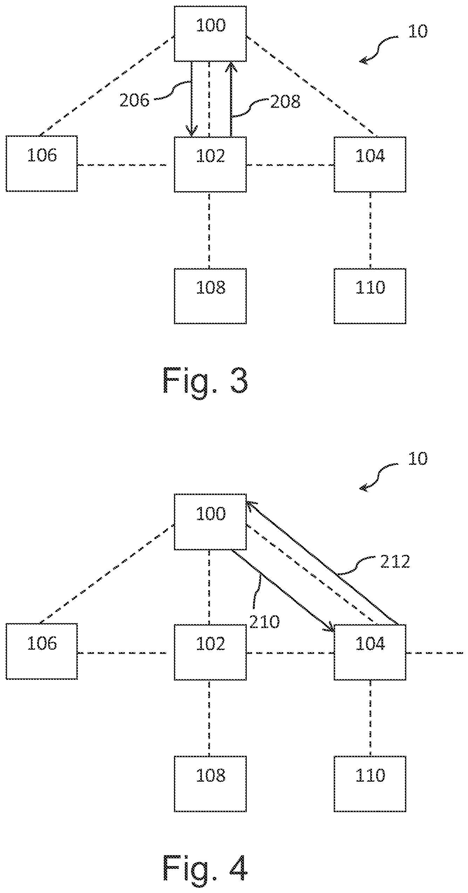

Figure 3 shows the sender device 100 communicating 206 with the receiver device 102 to verify whether the receiver device 102 has received all of the requested data and/or, similar to step 200 in Figure 1, the sender device 100 can communicate 206 with the receiver device 102 again to determine what pieces of data the receiver device 102 requires and/or needs. In response to the communication 206, the receiver device 102 can communicate 208 to the sender device 100 another data request or communicate that all needed data have been received. If the receiver device 102 requests additional or repeat of specific data (e.g., firmware update data piece 3 of 5 for device type A, because only that piece was not fully received in the last broadcast), the sender device 100 can perform another data broadcast. This can continue until the receiver device 102 communicates to the sender device 100 that all of the data requested have been completely received by the receiver device 102. During any of these repeated broadcasts by the sender device 100, the other receiver devices 104, 106, 108, 110 can continue to receive and store the data broadcasted by the sender device 100 (similar to shown in Figure 2 and described above).

Figure 4 shows the sender device 100, having determined that the receiver device 102 requires no more data from the sender device 100, communicates 210 with the receiver device 104 to determine what or which pieces of data the receiver device 104 requires and/or needs. In response to the communication 210, the receiver device 104 can communicate 212 to the sender device 100 a data request. The data request can be, for example, a request for a particular piece of data, a list of pieces of data, one or more data packets, etc.

For example, the data request can be a request for firmware update data pieces 1-10 for device type B, which might be a particular firmware update which the receiver device 104 having type B needs.

As another example, the data request can be a request for firmware update data piece 1 of 5 for device type A, which might be a particular firmware update which the receiver device 104 having type A needs, but having not fully received and/or stored during the broadcast of the data previously. For example, the receiver device 104 has already received and stored to its non-transitory memory firmware update data pieces 2-5 for type A during the broadcast (204 shown in Figure 2) of the data when the receiver device 102 requested the data from the sender device 100.

It is also possible that the receiver device 104 can communicate 212 to the sender device 100 that all of the data pieces it needs have already been received. Then, the sender device 100 can move on to communicating with one of the other receiver devices 106, 108, 110 (i.e., skip the step shown in Figure 5).

Figure 5 shows the sender device 100 transmitting 214 (e.g., broadcasting wirelessly) the data requested by the receiver device 104, if, for example, the receiver device 104 makes such request. The sender device 100 does not need to consider what the other receiver devices 102, 106, 108, 110 require at this time. The data transmitted by the sender device 100 can be received by the receiver device 104 as well as the other receiver devices 102, 106, 108, 110. Similar to the step shown in Figure 2, the other receiver devices 102, 106, 108, 110 can "eavesdrop" on this transmission. That is, although the broadcast data from the sender device 100 is in response to and for the receiver device 104, the other receiver devices 102, 106, 108, 110 are configured to receive the data. The other devices 102, 106, 108, 110 can determine whether the received data (e.g., firmware update data piece 1 of 5 for device type A) is appropriate. That is, if one or more of the other receiver devices 102, 106, 108, 110 are of the type A, and they have also missed the data requested by the receiver device 104, these receiver devices are provided another opportunity to "eavesdrop" and capture the data. So that when the sender device 100 communicates to that one or more of the receiver devices 106, 108, 110, that particular receiver device 106, 108, 110 might already have all of the data it needs. And thus, the communication from the sender device 100 to each of the receiver devices 106, 108, 110 can take a shorter amount of time with each broadcast by the sender device 100. Thus, it is possible that one or more of the receiver devices 102, 104, 106, 108, 110 can acquire all or parts of the data it needs by "eavesdropping" in the communication between the sender device 100 and any of the other receiver devices 102, 104, 106, 108, 110.

The receiver devices 102, 104, 106, 108, 110 can store the data they receive via broadcast and can make a determination of which pieces it might be missing when the sender device 100 requests such information (e.g., communicates with a particular receiver device).

The data (or piece of the data) can have a device type component which identifies the type of device the data is for, instead of a unique/specific device address. Thus, the data can be received by one or more receiver devices 102, 104, 106, 108, 110 and if one or more of the receiver devices 102, 104, 106, 108, 110 match the device type identified by the device type component of the data, the one or more of the receiver devices 102, 104, 106, 108, 110 would store the data (or piece of the data) to its respective non-transitory memory.

In an example where the data is firmware update data and a particular one or more of the receiver devices 102, 104, 106, 108, 110 has received all of the pieces of the data, the one or more of the receiver devices 102, 104, 106, 108, 110 can operate via its processor to update its firmware. The updating of the firmware can be performed after checking whether the received data is newer than the firmware it is using. The updating of the firmware can be performed without checking whether the received data is newer than the firmware it is using.

In an embodiment, the receiver devices 102, 104, 106, 108, 110 are set to receive broadcast data by communication via the network 10.

In another example, after the node 102 has received the entire file (e.g., all of the data packets which form the complete file), the sender device 100 can communicate instructions to the node 102 for the node 102 to use the same method (e.g., broadcasting the data pieces) so that the node 102 acts as the sender device. Accordingly, the node 108 can acts as the receiver device. The receiver device 108 might already have received some or all of the data, because even though it is two "hops" away from node 100 in the network 10 (via network routing), the receiver device 108 might be able to receive one or more broadcasted data packets from node 100. Thus, the receiver device 108 can communicate with the node 102 and request from the node 102 the pieces of the data that the receiver device 108 is missing. Further, during the transfer of the data requested by the receiver device 108 from the node 102, the node 102 can be configured to communicate data transfer progress report(s) to the node 100.

As an example, for ten nodes (receiver devices) in radio range of the sender device, out of thirty nodes, the sender device can broadcast firmware updates based on just one of the node's needs, and the other nine nodes in range can receive and store whatever/whichever pieces of the firmware data packets that has been broadcast by the sender device, so that when the sender device communicates to each of the other nine nodes, these nodes would likely have at least one or some of the data packets already received and stored into their respective non-transitory memories, or possibly even all of the data packets.

As another example, a computer device can store data that was broadcast by a sender device, although the data was not specifically targeted for that computer device.

Figure 6 shows an embodiment of a node device 300 (e.g., one or more of the devices 100, 102, 104, 106, 108 shown in Figures 1-5). The node device 300 includes a processor 302, a non-transitory memory 304, and a network interface 306. The processor 302 executes computer-readable instructions 308 for performing one or more of the exemplary methods described above (and shown in Figures 1-5). When the processor 302 executes the computer-readable instructions, broadcast data packets are received (e.g., eavesdropped) via the network interface 306, and then stored on the non-transitory memory 304.

With regard to the foregoing description, it is to be understood that changes may be made in detail without departing from the scope of the present invention. It is intended that the specification and depicted embodiment to be considered exemplary only, with the scope of the invention being indicated by the appended claims.

## Claims

1. A computer-implemented method for controlling data communication for a plurality of devices (100, 102, 104, 106, 108, 110, 300) connected in a network (10), comprising:
a second device (102) of the plurality of devices (100, 102, 104, 106, 108, 110, 300) transmitting a request (202) for data to the network (10);
a first device (100) of the plurality of devices (100, 102, 104, 106, 108, 110, 300) receiving the request (202) for data from the second device (102) of the plurality of devices (100, 102, 104, 106, 108, 110, 300); and
the first device (100) of the plurality of devices (100, 102, 104, 106, 108, 110, 300) broadcasting (204) to the network (10) the data that was requested by the second device (102) of the plurality of devices (100, 102, 104, 106, 108, 110, 300);
**characterized in that** the method further comprises a third device (104, 300) of the plurality of devices (100, 102, 104, 106, 108, 110, 300) receiving the data that was broadcasted (204) by the first device (100) of the plurality of devices (100, 102, 104, 106, 108, 110, 300);
the third device (104, 300) of the plurality of devices (100, 102, 104, 106, 108, 110, 300) having a processor (302) that executes computer-executable instructions (308) and determines whether the data is appropriate for the third device (104, 300) of the plurality of devices (100, 102, 104, 106, 108, 110, 300);
the third device (104, 300) of the plurality of devices (100, 102, 104, 106, 108, 110, 300) storing the data to a non-transitory computer-readable memory (304) of the third device (104, 300) of the plurality of devices (100, 102, 104, 106, 108, 110, 300) when the third device (104, 300) of the plurality of devices (100, 102, 104, 106, 108, 110, 300) has determined that the data is appropriate for the third device (104, 300) of the plurality of devices (100, 102, 104, 106, 108, 110, 300), and
when the third device (104, 300) of the plurality of devices (100, 102, 104, 106, 108, 110, 300) determines that there is missing data in the data received via the broadcast (204) from the first device (100) of the plurality of devices (100, 102, 104, 106, 108, 110, 300), the third device (104, 300) of the plurality of devices (100, 102, 104, 106, 108, 110, 300) transmitting a request for only the missing data to the first device (100) of the plurality of devices (100, 102, 104, 106, 108, 110, 300), the first device (100) of the plurality of devices (100, 102, 104, 106, 108, 110, 300) receiving the request for the missing data from the third device (104, 300) of the plurality of devices (100, 102, 104, 106, 108, 110, 300), and the first device (100) of the plurality of devices (100, 102, 104, 106, 108, 110, 300) responding to the request for the missing data by broadcasting only the missing data to the network (10).

2. The computer-implemented method according to claim 1, further comprising:
the second device (102) of the plurality of devices (100, 102, 104, 106, 108, 110, 300) sending the request of the data to the first device (100) via unicasting.

3. The computer-implemented method according to claim 1, further comprising:
the second device (102) of the plurality of devices (100, 102, 104, 106, 108, 110, 300) broadcasting the request of the data to the network (10).

4. A non-transitory computer-readable memory (304) including computer-readable instructions (308) for controlling data communication for the plurality of devices (100, 102, 104, 106, 108, 110, 300) in the network (10), comprising instructions (308) stored thereon, that when executed on a processor (302), performs the method in claim 1.

5. A non-transitory computer-readable memory (304) according to claim 4 including computer-readable instructions (308) for controlling data communication for the plurality of devices (100, 102, 104, 106, 108, 110, 300) in the network (10), comprising instructions (308) stored thereon, that when executed on a processor (302), performs the method in claim 2.

6. A non-transitory computer-readable memory (304) according to claim 4 including computer-readable instructions (308) for controlling data communication for the plurality of devices (100, 102, 104, 106, 108, 110, 300) in the network (10), comprising instructions (308) stored thereon, that when executed on a processor (302), performs the method in claim 3.

7. A network system, comprising:
a second device (102) and a third device (104) connected via a network (10);
a first device (100) configured for communicating with the second device (102) and the third device (104) via the network (10), wherein each of the first device (100), the second device (102) and the third device (104) comprises a processor (302), a non-transitory computer-readable memory (304), and a network interface (306), wherein the processor (302) of the second device (102) includes computer-executable instructions (308) that when executed by the processor (302) of the second device (102) transmits a request for data (202) via the network interface (306) to the first device (100), and wherein the processor (302) of the first device (100) includes computer-executable instructions that when executed by the processor (302) of the first device (100) broadcasts the data to the network (10),
**characterized in that** the processor (302) of the third device (104) further includes computer-executable instructions (308) that when executed by the processor (302) performs the steps of:
receiving the data broadcasted (204) by the first device (100);
determining whether the data is appropriate for the third device (104);
storing the data broadcasted (204) by the first device (100) to the non-transitory computer-readable memory (304) of the third device (104) when the data is appropriate; and
when the third device (104) determines that there is missing data in the data received via the broadcast (204) from the first device (100), the third device (104) transmitting a request for only the missing data to the first device (100), the first device (100) receiving the request for the missing data and the first device (100) responding to the request for the missing data by broadcasting only the missing data to the network (10).

## Patentansprüche

1. Computer-implementiertes Verfahren zum Steuern von Datenkommunikation für eine Vielzahl von Vorrichtungen (100, 102, 104, 106, 108, 110, 300), die in einem Netzwerk (10) verbunden sind, Folgendes umfassend:
eine zweite Vorrichtung (102) der Vielzahl von Vorrichtungen (100, 102, 104, 106, 108, 110, 300), die eine Anforderung (202) von Daten zu dem Netzwerk (10) überträgt;
eine erste Vorrichtung (100) der Vielzahl von Vorrichtungen (100, 102, 104, 106, 108, 110, 300), welche die Anforderung (202) von Daten von der zweiten Vorrichtung (102) der Vielzahl von Vorrichtungen (100, 102, 104, 106, 108, 110, 300) empfängt; und
eine erste Vorrichtung (100) der Vielzahl von Vorrichtungen (100, 102, 104, 106, 108, 110, 300), die zu dem Netzwerk (10) die Daten überträgt (204), die von der zweiten Vorrichtung (102) der Vielzahl von Vorrichtungen (100, 102, 104, 106, 108, 110, 300) angefordert wurden;
**dadurch gekennzeichnet, dass** das Verfahren ferner eine dritte Vorrichtung (104, 300) der Vielzahl von Vorrichtungen (100, 102, 104, 106, 108, 110, 300) umfasst, welche die Daten, die von der ersten Vorrichtung (100) der Vielzahl von Vorrichtungen (100, 102, 104, 106, 108, 110, 300) übertragen (204) wurden, empfängt;
wobei die dritte Vorrichtung (104, 300) der Vielzahl von Vorrichtungen (100, 102, 104, 106, 108, 110, 300) einen Prozessor (302) aufweist, der computerausführbare Anweisungen (308) ausführt und bestimmt, ob die Daten für die dritte Vorrichtung (104, 300) der Vielzahl von Vorrichtungen (100, 102, 104, 106, 108, 110, 300) geeignet sind;
wobei die dritte Vorrichtung (104, 300) der Vielzahl von Vorrichtungen (100, 102, 104, 106, 108, 110, 300) die Daten in einem nicht-transitorischen computerlesbaren Speicher (304) der dritten Vorrichtung (104, 300) der Vielzahl von Vorrichtungen (100, 102, 104, 106, 108, 110, 300) speichert, wenn die dritte Vorrichtung (104, 300) der Vielzahl von Vorrichtungen (100, 102, 104, 106, 108, 110, 300) bestimmt hat, dass die Daten für die dritte Vorrichtung (104, 300) der Vielzahl von Vorrichtungen (100, 102, 104, 106, 108, 110, 300) geeignet sind, und
wenn die dritte Vorrichtung (104, 300) der Vielzahl von Vorrichtungen (100, 102, 104, 106, 108, 110, 300) bestimmt, dass fehlende Daten in den Daten enthalten sind, die über die Übertragung (204) von der ersten Vorrichtung (100) der Vielzahl von Vorrichtungen (100, 102, 104, 106, 108, 110, 300) empfangen wurden,
die dritte Vorrichtung (104, 300) der Vielzahl von Vorrichtungen (100, 102, 104, 106, 108, 110, 300) eine Anforderung nur der fehlenden Daten zu der ersten Vorrichtung (100) der Vielzahl von Vorrichtungen (100, 102, 104, 106, 108, 110, 300) überträgt,
die erste Vorrichtung (100) der Vielzahl von Vorrichtungen (100, 102, 104, 106, 108, 110, 300) die Anforderung der fehlenden Daten von der dritten Vorrichtung (104, 300) der Vielzahl von Vorrichtungen (100, 102, 104, 106, 108, 110, 300) empfängt, und
die erste Vorrichtung (100) der Vielzahl von Vorrichtungen (100, 102, 104, 106, 108, 110, 300) auf die Anforderung der fehlenden Daten reagiert, indem sie nur die fehlenden Daten zu dem Netzwerk (10) überträgt.

2. Computer-implementiertes Verfahren gemäß Anspruch 1, ferner Folgendes umfassend:
die zweite Vorrichtung (102) der Vielzahl von Vorrichtungen (100, 102, 104, 106, 108, 110, 300), welche die Anforderung der Daten über Unicasting zu der ersten Vorrichtung (100) überträgt.

3. Computer-implementiertes Verfahren gemäß Anspruch 1, ferner Folgendes umfassend:
die zweite Vorrichtung (102) der Vielzahl von Vorrichtungen (100, 102, 104, 106, 108, 110, 300), welche die Anforderung der Daten zu dem Netzwerk (10) überträgt.

4. Nicht-transitorischer computerlesbarer Speicher (304), der computerlesbare Anweisungen (308) zum Steuern von Datenkommunikation für die Vielzahl von Vorrichtungen (100, 102, 104, 106, 108, 110, 300) in dem Netzwerk (10) enthält, die darin gespeicherte Anweisungen (308) umfassen, die, wenn sie auf einem Prozessor (302) ausgeführt werden, das Verfahren nach Anspruch 1 durchführen.

5. Nicht-transitorischer computerlesbarer Speicher (304) gemäß Anspruch 4, der computerlesbare Anweisungen (308) zum Steuern von Datenkommunikation für die Vielzahl von Vorrichtungen (100, 102, 104, 106, 108, 110, 300) in dem Netzwerk (10) enthält, die darin gespeicherte Anweisungen (308) umfassen, die, wenn sie auf einem Prozessor (302) ausgeführt werden, das Verfahren nach Anspruch 2 durchführen.

6. Nicht-transitorischer computerlesbarer Speicher (304) gemäß Anspruch 4, der computerlesbare Anweisungen (308) zum Steuern von Datenkommunikation für die Vielzahl von Vorrichtungen (100, 102, 104, 106, 108, 110, 300) in dem Netzwerk (10) enthält, die darin gespeicherte Anweisungen (308) umfassen, die, wenn sie auf einem Prozessor (302) ausgeführt werden, das Verfahren nach Anspruch 3 durchführen.

7. Netzwerksystem, Folgendes umfassend:
eine zweite Vorrichtung (102) und eine dritte Vorrichtung (104), die über ein Netzwerk (10) verbunden sind;
eine erste Vorrichtung (100), die zum Kommunizieren mit der zweiten Vorrichtung (102) und der dritten Vorrichtung (104) über das Netzwerk (10) ausgelegt ist,
wobei jede der ersten Vorrichtung (100), der zweiten Vorrichtung (102) und der dritten Vorrichtung (104) einen Prozessor (302), einen nicht-transitorischen computerlesbaren Speicher (304) und eine Netzwerk-Schnittstelle (306) umfasst,
wobei der Prozessor (302) der zweiten Vorrichtung (102) computerausführbare Anweisungen (308) aufweist, die, wenn sie durch den Prozessor (302) der zweiten Vorrichtung (102) ausgeführt werden, eine Anforderung von Daten (202) über die Netzwerk-Schnittstelle (306) zu der ersten Vorrichtung (100) übertragen, und
wobei der Prozessor (302) der ersten Vorrichtung (100) computerausführbare Anweisungen aufweist, die, wenn sie durch den Prozessor (302) der ersten Vorrichtung (100) ausgeführt werden, die Daten zu dem Netzwerk (10) übertragen,
**dadurch gekennzeichnet, dass** der Prozessor (302) der dritten Vorrichtung (104) ferner computerausführbare Anweisungen (308) aufweist, die, wenn sie durch den Prozessor (302) ausgeführt werden, die folgenden Schritte ausführen:
Empfangen der von der ersten Vorrichtung (100) übertragenen (204) Daten;
Bestimmen, ob die Daten für die dritte Vorrichtung (104) geeignet sind;
Speichern der von der ersten Vorrichtung (100) übertragenen (204) Daten in dem nicht-transitorischen computerlesbaren Speicher (304) der dritten Vorrichtung (104), wenn die Daten geeignet sind; und
wenn die dritte Vorrichtung (104) bestimmt, dass fehlende Daten in den Daten enthalten sind, die über die Übertragung (204) von der ersten Vorrichtung (100) empfangen wurden, die dritte Vorrichtung (104) eine Anforderung nur der fehlenden Daten zu der ersten Vorrichtung (100) überträgt, die erste Vorrichtung (100) die Anforderung der fehlenden Daten empfängt, und die erste Vorrichtung (100) auf die Anforderung der fehlenden Daten reagiert, indem sie nur die fehlenden Daten zu dem Netzwerk (10) überträgt.

## Revendications

1. Procédé mis en œuvre par ordinateur pour commander une communication de données pour une pluralité de dispositifs (100, 102, 104, 106, 108, 110, 300) connectés dans un réseau (10), comprenant :
la transmission par un deuxième dispositif (102) de la pluralité de dispositifs (100, 102, 104, 106, 108, 110, 300) d'une demande de données (202) au réseau (10) ;
la réception par un premier dispositif (100) de la pluralité de dispositifs (100, 102, 104, 106, 108, 110, 300) de la demande de données (202) en provenance du deuxième dispositif (102) de la pluralité de dispositifs (100, 102, 104, 106, 108, 110, 300) ; et
la diffusion (204) par le premier dispositif (100) de la pluralité de dispositifs (100, 102, 104, 106, 108, 110, 300) au réseau (10) des données demandées par le deuxième dispositif (102) de la pluralité de dispositifs (100, 102, 104, 106, 108, 110, 300) ;
**caractérisé en ce que** le procédé comprend en outre la réception par un troisième dispositif (104, 300) de la pluralité de dispositifs (100, 102, 104, 106, 108, 110, 300) des données diffusées (204) par le premier dispositif (100) de la pluralité de dispositifs (100, 102, 104, 106, 108, 110, 300) ;
le troisième dispositif (104, 300) de la pluralité de dispositifs (100, 102, 104, 106, 108, 110, 300) comportant un processeur (302) qui exécute des instructions exécutables par ordinateur (308) et détermine si les données sont appropriées ou non pour le troisième dispositif (104, 300) de la pluralité de dispositifs (100, 102, 104, 106, 108, 110, 300) ;
la mémorisation par le troisième dispositif (104, 300) de la pluralité de dispositifs (100, 102, 104, 106, 108, 110, 300) des données dans une mémoire non transitoire lisible par ordinateur (304) du troisième dispositif (104, 300) de la pluralité de dispositifs (100, 102, 104, 106, 108, 110, 300) quand le troisième dispositif (104, 300) de la pluralité de dispositifs (100, 102, 104, 106, 108, 110, 300) a déterminé que les données sont appropriées pour le troisième dispositif (104, 300) de la pluralité de dispositifs (100, 102, 104, 106, 108, 110, 300), et
quand le troisième dispositif (104, 300) de la pluralité de dispositifs (100, 102, 104, 106, 108, 110, 300) détermine des données manquantes dans les données reçues par l'intermédiaire de la diffusion (204) en provenance du premier dispositif (100) de la pluralité de dispositifs (100, 102, 104, 106, 108, 110, 300), la transmission par le troisième dispositif (104, 300) de la pluralité de dispositifs (100, 102, 104, 106, 108, 110, 300) d'une demande relative uniquement aux données manquantes au premier dispositif (100) de la pluralité de dispositifs (100, 102, 104, 106, 108, 110, 300), la réception par le premier dispositif (100) de la pluralité de dispositifs (100, 102, 104, 106, 108, 110, 300) de la demande des données manquantes en provenance du troisième dispositif (104, 300) de la pluralité de dispositifs (100, 102, 104, 106, 108, 110, 300), et la réponse par le premier dispositif (100) de la pluralité de dispositifs (100, 102, 104, 106, 108, 110, 300) à la demande des données manquantes en diffusant uniquement les données manquantes au réseau (10).

2. Procédé mis en œuvre par ordinateur selon la revendication 1, comprenant en outre :
l'envoi par le deuxième dispositif (102) de la pluralité de dispositifs (100, 102, 104, 106, 108, 110, 300) de la demande des données au premier dispositif (100) par unidiffusion.

3. Procédé mis en œuvre par ordinateur selon la revendication 1, comprenant en outre :
la diffusion par le deuxième dispositif (102) de la pluralité de dispositifs (100, 102, 104, 106, 108, 110, 300) de la demande des données au réseau (10).

4. Mémoire non transitoire lisible par ordinateur (304) comportant des instructions lisibles par ordinateur (308) pour commander une communication de données pour la pluralité de dispositifs (100, 102, 104, 106, 108, 110, 300) dans le réseau (10), sur laquelle sont mémorisées des instructions (308) qui, à leur exécution sur un processeur (302), réalisent le procédé selon la revendication 1.

5. Mémoire non transitoire lisible par ordinateur (304) selon la revendication 4 comportant des instructions lisibles par ordinateur (308) pour commander une communication de données pour la pluralité de dispositifs (100, 102, 104, 106, 108, 110, 300) dans le réseau (10), sur laquelle sont mémorisées des instructions (308) qui, à leur exécution sur un processeur (302), réalisent le procédé selon la revendication 2.

6. Mémoire non transitoire lisible par ordinateur (304) selon la revendication 4 comportant des instructions lisibles par ordinateur (308) pour commander une communication de données pour la pluralité de dispositifs (100, 102, 104, 106, 108, 110, 300) dans le réseau (10), sur laquelle sont mémorisées des instructions (308) qui, à leur exécution sur un processeur (302), réalisent le procédé selon la revendication 3.

7. Système de réseau, comprenant :
un deuxième dispositif (102) et un troisième dispositif (104) connectés par l'intermédiaire d'un réseau (10) ;
un premier dispositif (100) configuré pour communiquer avec le deuxième dispositif (102) et le troisième dispositif (104) par l'intermédiaire du réseau (10), chacun du premier dispositif (100), du deuxième dispositif (102) et du troisième dispositif (104) comprenant un processeur (302), une mémoire non transitoire lisible par ordinateur (304), et une interface réseau (306), le processeur (302) du deuxième dispositif (102) comportant des instructions exécutables par ordinateur (308) qui, à leur exécution par le processeur (302) du deuxième dispositif (102), transmettent une demande de données (202) par l'intermédiaire de l'interface réseau (306) au premier dispositif (100), et le processeur (302) du premier dispositif (100) comportant des instructions exécutables par ordinateur qui, à leur exécution par le processeur (302) du premier dispositif (100), diffusent les données au réseau (10),
**caractérisé en ce que** le processeur (302) du troisième dispositif (104) comporte en outre des instructions exécutables par ordinateur (308) qui, à leur exécution par le processeur (302), réalisent les étapes de :
réception des données diffusées (204) par le premier dispositif (100) ;
détermination si les données sont appropriées ou non pour le troisième dispositif (104) ;
mémorisation des données diffusées (204) par le premier dispositif (100) dans la mémoire non transitoire lisible par ordinateur (304) du troisième dispositif (104) quand les données sont appropriées ; et
quand le troisième dispositif (104) détermine des données manquantes dans les données reçues par l'intermédiaire de la diffusion (204) en provenance du premier dispositif (100), transmission par le troisième dispositif (104) d'une demande relative uniquement aux données manquantes au premier dispositif (100), réception par le premier dispositif (100) de la demande des données manquantes et réponse par le premier dispositif (100) à la demande des données manquantes en diffusant uniquement les données manquantes au réseau (10).
